# EUROPÄISCHE PATENTANMELDUNG

(11) **EP 3 965 271 A1**
(43) Veröffentlichungstag der Anmeldung: **09.03.2022**
(21) Anmeldenummer: 21192444.4
(22) Anmeldetag: 20.08.2021
(51) Int. Cl.: H02K 15/04

(54) **VERFAHREN DES GLEICHZEITIGEN ABISOLIERENS EINER MEHRZAHL AN STARREN LEITERELEMENTEN FÜR HAARNADELSPULEN**

(30) Priorität: 02.09.2020 DE 102020211026
(71) Anmelder: Ford Global Technologies, LLC, Dearborn, MI 48126 (US)
(72) Erfinder: Baranowski, Thomas, 52146 Würselen (DE); Engelke, Maximilian, 52074 Aachen (DE); Magnani, Maira, 52074 Aachen (DE); Broda, Maik, 52146 Würselen (DE); Koch, Raphael, 51519 Odenthal (DE); Mathissen, Marcel, 52531 Übach-Palenberg (DE)
(74) Vertreter: Markowitz, Markus

(57) **Zusammenfassung**

Die Erfindung betrifft ein Abisolierverfahren für Leiterelemente (2) für eine Haarnadelspule (1). Um ein effizientes Abisolieren der Leiterelemente für die Herstellung einer Haarnadelspule zu ermöglichen, ist erfindungsgemäß vorgesehen, dass das Abisolierverfahren die folgenden Schritte aufweist:
- Bereitstellen einer Mehrzahl von Leiterelementen (2), jeweils aufweisend eine elektrisch isolierende Oberflächenbeschichtung (4) sowie Leiterendabschnitte (2.3, 2.4),
- Sichern der Relativpositionen von Leiterendabschnitten (2.3, 2.4) der Mehrzahl von Leiterelementen (2) zueinander, sowie
- Gleichzeitiges Abisolieren einer Mehrzahl von Leiterendabschnitten (2.3, 2.4) mehrerer Leiterelemente (2) durch wenigstens bereichsweises Entfernen der Oberflächenbeschichtung (4), indem eine Bearbeitungsfläche (10.1) eines Abisolierwerkzeugs (10) gleichzeitig abtragend an der Mehrzahl von Leiterendabschnitten (2.3, 2.4) entlang bewegt wird.

## Beschreibung

Die Erfindung betrifft ein Abisolierverfahren für Leiterelemente für eine Haarnadelspule.

Elektromotoren kommen in verschiedenen Bereichen der Technik, z.B. auch im Kraftfahrzeugbau, zum Einsatz. Neben traditionellen Typen von Elektromotoren, bei denen eine Spule einen Draht aufweist, der um einen ferromagnetischen Kern, normalerweise ein Blechpaket, gewickelt ist, sind auch sogenannte Haarnadelspulen bekannt. Bei diesen wird nicht ein einzelner Draht gewickelt, sondern einzeln vorgefertigte Leiterelemente, die Haarnadeln ähneln, werden in einer vorgesehenen Konfiguration am Stator bzw. Rotor angeordnet und anschließend elektrisch verbunden, so dass sie gemeinsam die Spule bilden. Die Leiterelemente bestehen in aller Regel aus Kupfer bzw. einer Kupferlegierung. Üblicherweise werden zur Verbindung vorgesehene Enden der Leiterstücke unmittelbar benachbart zueinander angeordnet und dann elektrisch verbunden, z.B. mittels Laserschweißen. Im Vergleich zum traditionellen Wickeln einer Spule ergeben sich verschiedene Vorteile, z.B. ein besseres Schlitzfüllverhältnis, d.h. ein besseres Verhältnis zwischen der zusammengesetzten Querschnittfläche der Leiter in einem Schlitz des Stators und der Querschnittfläche des Schlitzes selbst. Hierdurch lässt sich der Kupferbedarf reduzieren und es lassen sich Motoren mit höherer Leistung bzw. mit kleinerem Formfaktor produzieren. Um Kurzschlüsse zu vermeiden, sind die vorgefertigten Leiterelemente normalerweise vollständig mit einer isolierenden Beschichtung (Isolierlack oder dergleichen) versehen. Um die elektrische Verbindung herstellen zu können, muss die Beschichtung an den zu verbindenden Enden entfernt werden, z.B. mechanisch, chemisch oder mittels Laser. Dies geschieht üblicherweise an jedem einzelnen Leiterelement vor dem Anbringen der Leiterelemente am Stator bzw. Rotor, was den gesamten Herstellungsprozess verkompliziert.

Die US 7 480 987 B1 offenbart ein Verfahren zum Vorformen isolierter Leiter für Motorrotoren und Statoren. Es wird ein isolierter Draht mit rechteckigem Querschnitt von einer Spule abgewickelt, begradigt, über eine vorbestimmte Länge abisoliert, einer Biegevorrichtung zugeführt, auf Länge geschnitten und dann in die gewünschte Haarnadelform gebogen. Das Abisolieren erfolgt nacheinander auf gegenüberliegenden Seiten des Drahtes, wobei ein Schleifrad auf einer Seite angreift, während der Draht auf der gegenüberliegenden Seite durch eine Stützrolle gestützt wird.

Die CN 105576861 A offenbart ein Verfahren zum Herstellen eines Haarnadelwickelungsmotors unter Verwendung einer Statorplatte sowie eines Statorkerns mit einer Mehrzahl von Schlitzen. Zunächst wird ein gebogenes Isolierpapier in jeden Schlitz des Statorkerns eingeführt. Dann erfolgt ein Formen der einzelnen Haarnadelleiter sowie ein Abisolieren derselben. Es folgt ein Anordnen von Statorplatten auf beiden Seiten des Statorkerns und ein Einführen der Haarnadelleiter in das Isolierpapier und Durchführen eines Verdrehvorgangs am hinteren Teil der Haarnadelleiter. Das Abisolieren kann durch Fräsen, Schleifen oder chemische Behandlung erfolgen.

Die DE 102 58 029 B4 zeigt eine Positionier- und Spannvorrichtung zum Positionieren und Spannen wenigstens eines Drahtendes zwecks Weiterverarbeitung im Zuge einer Herstellung eines Maschinenelements einer elektrischen Maschine. Die Vorrichtung umfasst eine Fangeinrichtung zum Fangen und Positionieren des wenigstens einen Drahtendes, wobei die Fangeinrichtung wenigstens eine Schrägführung zum relativen Positionieren des wenigstens einen Drahtendes aufweist.

Angesichts des aufgezeigten Standes der Technik bietet die Effizienz des Abisolierens der Leiterelemente für die Herstellung einer Haarnadelspule noch Raum für Verbesserungen. Dies betrifft insbesondere die hierfür notwendige Prozesszeit.

Der Erfindung liegt die Aufgabe zugrunde, ein effizientes Abisolieren der Leiterelemente für die Herstellung einer Haarnadelspule zu ermöglichen.

Erfindungsgemäß wird die Aufgabe durch ein Abisolierverfahren mit den Merkmalen des Anspruchs 1 gelöst, wobei die Unteransprüche vorteilhafte Ausgestaltungen der Erfindung betreffen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Durch die Erfindung wird ein Abisolierverfahren für Leiterelemente für eine Haarnadelspule zur Verfügung gestellt. Der Begriff "Haarnadelspule" bezieht sich hierbei auf eine Spule, deren Leiter bzw. deren Wicklung nicht aus einem durchgehenden gewickelten Draht besteht, sondern aus einzelnen, vorgefertigten und anschließend elektrisch miteinander verbundenen Leiterelementen, die haarnadelartig ausgebildet sind und teilweise auch als "Haarnadelleiter" oder "Haarnadelelemente" bezeichnet werden. Insbesondere kann die Haarnadelspule Teil eines Elektromotors sein. Es kann sich insbesondere um die Spule eines Stators oder um die Spule eines Rotors des Elektromotors handeln. Es kann sich bei dem Elektromotor um einen Fahrmotor bzw. Antriebsmotor eines Elektrofahrzeugs handeln.

Gemäß einem Schritt des Verfahrens wird eine Mehrzahl von Leiterelementen bereitgestellt, welche jeweils eine elektrisch isolierende Oberflächenbeschichtung sowie Leiterendabschnitte aufweisen. Das jeweilige Leiterelement weist in aller Regel einen leitfähigen Kern aus Kupfer bzw. einer Kupferlegierung auf. Es weist zudem eine elektrisch isolierende Oberflächenbeschichtung auf, bei der es sich typischerweise um einen Isolierlack handelt. Der Querschnitt der Leiterelemente kann bspw. rund, insbesondere kreisförmig, oder polygonal, insbesondere rechteckig, ausgebildet sein. Die vorgefertigten Leiterelemente, die beim erfindungsgemäßen Abisolierverfahren verwendet werden, weisen zu Anfang normalerweise eine Oberflächenbeschichtung auf, die die gesamte Oberfläche bedeckt, ggf. abgesehen von Endflächen, entlang derer das Leiterelement z.B. von einem Draht abgeschnitten wurde. Die entsprechen Oberflächenbeschichtung kann bspw. durch Tauchen oder Sprühen auf die Leiterelemente aufgebracht worden sein bzw. auf einen Draht, von dem die Leiterelemente geschnitten wurden. Die Oberflächenbeschichtung ist elektrisch isolierend und weist wenigstens ein Material auf, das als elektrischer Nichtleiter (mit einer elektrischen Leitfähigkeit von typischerweise weniger als 10⁻⁸ S/m) klassifiziert werden kann. Es versteht sich, dass die elektrisch isolierende Wirkung der Oberflächenbeschichtung insbesondere auch von ihrer Dicke abhängt. Diese ist so gewählt, dass beim normalen Betrieb der Haarnadelspule entsprechend den zu erwartenden Spannungen allenfalls ein vernachlässigbarer Stromfluss durch die Oberflächenbeschichtung möglich ist. Jedes Leiterelement weist Leiterendabschnitte auf, die selbstverständlich endseitig des Leiterelements angeordnet sind. Wie der Rest des Leiterelements weisen Leiterendabschnitte die Oberflächenbeschichtung auf und sind zu Beginn des Verfahrens normalerweise überwiegend mit dieser bedeckt.

In einem weiteren Schritt erfolgt ein Sichern der Relativpositionen von Leiterendabschnitten der Mehrzahl von Leiterelementen zueinander. D. h., die Leiterendabschnitte werden, normalerweise durch einen Formschluss sowie ggf. durch einen Kraftschluss, gegen eine gegenseitige Verschiebung gesichert. Unter Umständen kann man auch sagen, dass die Leiterendabschnitte gegeneinander arretiert werden. Bevorzugt werden die Relativpositionen so gesichert, dass die Leiterendabschnitte paarweise beabstandet bzw. im Abstand zueinander angeordnet sind. Insofern, als die Leiterelemente und somit auch die Leiterendabschnitte eine gewisse Flexibilität aufweisen, ist es möglich, dass die Leiterendabschnitte nicht insgesamt vollständig arretiert werden, sondern nur bereichsweise, während in anderen Bereichen eine (geringfügige) Verschiebung gegeneinander möglich ist. Insofern, als jedes Leiterelement zwei Leiterendabschnitte aufweist, ist es möglich, dass nur die Relativpositionen von einem Leiterendabschnitt pro Leiterelement gesichert werden, oder auch die Relativpositionen beider Leiterendabschnitte. Während die Relativpositionen der Leiterendabschnitte zueinander gesichert werden, ist es im Rahmen des Verfahrens möglich, dass sich die Position bzw. Ausrichtung der Leiterendabschnitte gegenüber einem feststehenden Bezugspunkt ändert bzw. aktiv geändert wird. Vor dem Sichern der Relativpositionen kann insbesondere ein Ausrichten der Leiterendabschnitte erfolgen, welches einem Einstellen der Relativpositionen der Leiterendabschnitte entspricht.

In einem weiteren Verfahrensschritt erfolgt ein gleichzeitiges Abisolieren einer Mehrzahl von Leiterendabschnitten mehrerer Leiterelemente durch wenigstens bereichsweises Entfernen der Oberflächenbeschichtung, indem eine Bearbeitungsfläche eines Abisolierwerkzeugs gleichzeitig abtragend an der Mehrzahl von Leiterendabschnitten entlang bewegt wird. D. h., bei einer Mehrzahl von Leiterendabschnitten, welche mehreren bzw. verschiedenen Leiterelementen zugeordnet sind, erfolgt gleichzeitig ein Abisolieren, wobei die Oberflächenbeschichtung des jeweiligen Leiterendabschnitts durch das Abisolieren wenigstens bereichsweise entfernt wird. Dabei wird eine Bearbeitungsfläche des Abisolierwerkzeugs gleichzeitig abtragend an der Mehrzahl von Leiterendabschnitten entlang bewegt. Mit anderen Worten, die Bearbeitungsfläche bewegt sich relativ zu den Leiterendabschnitten an diesen entlang, wobei sie in Kontakt mit den Leiterendabschnitten steht und abtragend auf diese einwirkt. In diesem Zusammenhang bezieht sich "abtragend" auf ein mechanisches, spanendes Abtragen, bspw. durch Schleifen. Es versteht sich, dass das Abisolierwerkzeug hierbei motorisch angetrieben wird.

Das Abisolierwerkzeug bzw. der Teil, der die Bearbeitungsfläche bildet, kann aus unterschiedlichen Materialien, bspw. einem Metall oder Keramik, bestehen. Um einen frühzeitigen Verschleiß zu vermeiden, sollte die Härte des entsprechenden Materials selbstverständlich deutlich größer sein als die der abzutragenden Oberflächenbeschichtung und normalerweise auch größer als die Härte des Materials, aus dem die Leiterelemente bestehen (z.B. Kupfer bzw. Kupferlegierung). Sofern hier und im Folgenden von der Bearbeitungsfläche und ihrer Form gesprochen wird, bezieht sich dies auf die generelle Form im Großen und Ganzen und nicht auf die Feinstruktur. Letztere ist im Allgemeinen kompliziert, da die Bearbeitungsfläche eine gewisse Rauheit aufweisen muss, um das mechanische Abtragen zu realisieren. Um ein effektives Abtragen zu ermöglichen, muss zwischen dem Abisolierwerkzeug mit der Bearbeitungsfläche und dem jeweiligen Leiterendabschnitt auch ein gewisser Anpressdruck erzeugt werden. Die Sicherung der Relativpositionen der Leiterendabschnitte kann auch dazu dienen, dass der genannte Anpressdruck aufgebaut werden kann, ohne dass die Leiterendabschnitte übermäßig ausweichen. Erfindungsgemäß erfolgt also kein aufeinanderfolgendes Abisolieren einzelner Leiterendabschnitte, sondern eine Mehrzahl von Leiterendabschnitten mehrerer Leiterelemente wird gleichzeitig abisoliert, indem die Bearbeitungsfläche gleichzeitig auf diese Leiterendabschnitte einwirkt. Aufgrund des parallel durchgeführten Abisolierens an mehreren Leiterendabschnitten ist das Verfahren zeiteffizient. Zudem lässt sich das mechanische Abtragen mittels des Abisolierwerkzeugs kostengünstig realisieren.

Nach dem Abisolieren können die Leiterendabschnitte entsprechend einer vorgesehenen Verschaltung elektrisch verbunden werden, z.B. durch Verschweißen. Zwischen dem erfindungsgemäßen Abisolieren und dem elektrischen Verbinden können ein oder mehrere Arbeitsschritte erfolgen, z.B. ein Biegen der Leiterendabschnitte, so dass zu verbindende Leiterendabschnitte benachbart zueinander angeordnet werden.

Im Zuge der Herstellung der Haarnadelspule werden die Leiterelemente an einem Spulenträger positioniert, wobei sie haarnadelartig ausgebildet sind, was bedeutet, dass sie normalerweise zwei sich in einer Erstreckungsrichtung erstreckende Schenkel aufweisen sowie einen diese Schenkel verbindenden Bogenabschnitt. Die Schenkel können wenigstens abschnittsweise gerade ausgebildet sein und/oder parallel zueinander verlaufen. Der Bogenabschnitt kann gekrümmt und/oder abgewinkelt ausgebildet sein. Die Leiterendabschnitte sind dabei normalerweise Teil der o.g. Schenkel des Leiterelements. Die haarnadelartige Form bzw. U-Form wird normalerweise durch Biegen der Leiterelemente hergestellt, nachdem diese z.B. von einem Draht abgeschnitten wurden, wobei sie zunächst gestreckt bzw. leicht gebogen ausgebildet sind. Wie nachfolgend noch erläutert wird, kann das erfindungsgemäße Abisolieren erfolgen bevor oder nachdem die Leiterelemente in die haarnadelartige Form gebracht werden.

Der Spulenträger kann in diesem Zusammenhang ein- oder mehrteilig ausgebildet sein und bildet allgemein eine gemeinsame Basis, an der die Leiterelemente positioniert und bspw. durch Formschluss aufgenommen werden können. Typischerweise kann der Spulenträger eine grob zylinderartige bzw. zylindersymmetrische Form aufweisen. Er kann bspw. einen ferromagnetischen Spulenkern aufweisen. Es versteht sich, dass das Positionieren der Leiterelemente am Spulenträger bzw. das Einsetzen der Leiterelemente in den Spulenträger normalerweise maschinell und vollautomatisch erfolgt. Die Leiterelemente werden derart am Spulenträger positioniert, dass die Leiterendabschnitte vom Spulenträger abragen, also vom Spulenträger abstehen oder gegenüber diesem vorstehen. Wenn die Leiterelemente am Spulenträger positioniert werden, sind normalerweise sämtliche Leiterendabschnitte parallel zueinander sowie parallel zu einer Mittelachse bzw. Symmetrieachse des Spulenträgers ausgerichtet. Jedes Leiterelement weist zwei Leiterendabschnitte auf, wobei nach dem Einsetzen üblicherweise die Leiterendabschnitte sämtlicher Leiterelemente auf einer Seite vom Spulenträger abragen, während die Bogenabschnitte der Leiterelemente auf einer gegenüberliegenden Seite angeordnet sind. Auch wenn das Abisolieren durchgeführt wird, nachdem die Leiterelemente haarnadelartig geformt wurden, kann es erfolgen, bevor oder nachdem die Leiterelemente am Spulenträger positioniert werden.

Gemäß einer bevorzugten Ausführungsform werden die Relativpositionen der Leiterendabschnitte gesichert, indem eine Maske mit einer Mehrzahl von Durchgangsöffnungen so positioniert wird, dass jeweils ein Leiterendabschnitt in einer Durchgangsöffnung formschlüssig aufgenommen ist und durch diese hindurchragt. Die Maske ist normalerweise einstückig ausgebildet und kann bspw. aus Metall oder Keramik bestehen. Sie kann insbesondere als ebene Scheibe ausgebildet sein. Sie weist eine Mehrzahl von Durchgangsöffnungen auf, wobei für jeden Leiterendabschnitt eine Durchgangsöffnung vorgesehen ist. Um die Leiterendabschnitte gegeneinander zu arretieren, werden diese teilweise durch die Durchgangsöffnungen hindurchgeführt, so dass sie durch diese hindurchragen. Dabei ist die jeweilige Durchgangsöffnung so bemessen, dass sie den Leiterendabschnitt formschlüssig aufnehmen kann. Der Formschluss kann ggf. durch einen Kraftschluss ergänzt werden, so dass der Leiterendabschnitt in der Durchgangsöffnung eingeklemmt wird. Andererseits kann die Durchgangsöffnung auch so bemessen sein, dass der Leiterendabschnitt mit Spiel bzw. mit einem (geringfügigen) Abstand zum Rand der Durchgangsöffnung aufgenommen werden kann. Hierdurch ist es insbesondere möglich, den Leiterendabschnitt innerhalb der Durchgangsöffnung unterschiedlich zu neigen. Es ist auch möglich, dass die Durchgangsöffnungen randseitig offen sind und gewissermaßen als randseitige Kerben oder Schlitze ausgebildet sind, in welche der Leiterendabschnitt seitlich eingeführt werden kann. Der Querschnitt jeder Durchgangsöffnung kann sich vom Rand zu einer vorgesehenen Endposition des Leiterendabschnitts hin verjüngen, also einen keil- oder trichterförmigen Querschnitt aufweisen, was das seitliche Einführen des Leiterendabschnitts erleichtert. Abgesehen von den für die Leiterendabschnitte vorgesehenen Durchgangsöffnungen kann die Maske in sich geschlossen sein. Zusätzlich zu ihrer Arretierungsfunktion kann die Maske eventuell auch dazu dienen, Material aufzufangen, das sich beim Abisolieren von den Leiterendabschnitten löst.

Nachdem sämtliche Leiterendabschnitte abisoliert wurden, kann die Maske wieder entfernt werden. Bevorzugt wird die Maske nach dem Abisolieren entfernt und wiederverwendet. Sie kann nacheinander bei einer Vielzahl von Verfahrensdurchläufen verwendet werden. Dies ist vor allem deshalb möglich, weil die Maske selbst normalerweise keiner nennenswerten mechanischen oder thermischen Belastung ausgesetzt ist. Die Wiederverwendbarkeit kann selbstverständlich auch dadurch unterstützt werden, dass widerstandsfähige Materialien wie bspw. Edelstahl oder Keramik zur Fertigung der Maske verwendet werden.

Wie bereits oben erwähnt, kann vor dem Sichern der Relativpositionen eine Ausrichtung der Leiterendabschnitte erfolgen. Gemäß einer bevorzugten Ausgestaltung wird die Mehrzahl von Leiterendabschnitten vor dem Sichern der Relativpositionen parallel ausgerichtet und die Bearbeitungsfläche ist beim Abisolieren schräg zur Verlaufsrichtung der Mehrzahl von Leiterendabschnitten ausgerichtet. Der Begriff "parallel" ist in diesem Zusammenhang nicht im streng mathematischgeometrischen Sinne zu verstehen, da eine derartige exakte Ausrichtung der Leiterendabschnitte schon aufgrund ihrer Flexibilität kaum zu realisieren ist. D.h., die Ausrichtung der Leiterendabschnitte zueinander kann auch geringfügig voneinander abweichen, bspw. um maximal 5°. In diesem Sinne können sämtliche Leiterendabschnitte (annähernd) durch eine gemeinsame Verlaufsrichtung charakterisiert werden. Die Bearbeitungsfläche, welche insbesondere eben ausgebildet sein kann, aber nicht muss, ist beim Abisolieren schräg zur Verlaufsrichtung ausgerichtet, also weder parallel zur Verlaufsrichtung noch senkrecht hierzu. Somit entsteht beim Zusammenwirken der Bearbeitungsfläche mit dem jeweiligen Leiterendabschnitt eine Fase bzw. Abschrägung. Man kann auch sagen, der jeweilige Leiterendabschnitt wird durch die Bearbeitungsfläche angefast.

Es ist bevorzugt, dass während des Abisolierens die Mehrzahl von Leiterendabschnitten parallel gehalten werden und ihre Verlaufsrichtung gegenüber der Bearbeitungsfläche so verändert wird, dass nacheinander verschiedene Teile der Leiterendabschnitte abisoliert werden. D. h., die Verlaufsrichtung gegenüber der Bearbeitungsfläche wird verändert, wodurch nacheinander unterschiedliche Teile des jeweiligen Leiterendabschnitt in Kontakt mit der Bearbeitungsfläche gelangen und wie beschrieben abisoliert werden. Insbesondere kann es sich dabei um unterschiedliche Seiten des Leiterendabschnitts handeln. Entsprechend wird die oben beschriebene Fase auf unterschiedlichen Seiten erzeugt, ggf. auch umlaufend um den gesamten Leiterendabschnitt. Insbesondere kann ein Neigungswinkel der Leiterendabschnitte gegenüber der Bearbeitungsfläche (also der Winkel zwischen der Verlaufsrichtung und der Bearbeitungsfläche) konstant gehalten werden, während die Verlaufsrichtung gegenüber der Bearbeitungsfläche verändert wird. Die Bearbeitungsfläche kann kontinuierlich auf die Leiterendabschnitte einwirken, während die Verlaufsrichtung geändert wird. Alternativ oder zusätzlich kann die Einwirkung der Bearbeitungsfläche zeitweise unterbrochen werden, während die Verlaufsrichtung geändert wird. Soweit dies im Hinblick auf die Form der Leiterelemente sowie eine Sicherung der Leiterelemente möglich ist, ist es bevorzugt, dass die Änderung der Verlaufsrichtung der Leiterendabschnitte gegenüber der Bearbeitungsfläche durch eine Lageänderung der Leiterelemente insgesamt erfolgt, z.B. derart, dass das jeweilige Leiterelement insgesamt geneigt und/oder gedreht wird. Grundsätzlich ist es aber auch denkbar, dass eine Änderung der Verlaufsrichtung der Leiterendabschnitte bei gleichzeitigem Parallelhalten der Leiterendabschnitte erfolgt, indem die Leiterendabschnitte gegenüber dem Rest des jeweiligen Leiterelements nacheinander in unterschiedliche Richtungen gebogen werden.

Bevorzugt werden durch eine Sicherungsvorrichtung die Relativpositionen von Sicherungsabschnitten der Mehrzahl von Leiterelementen zueinander gesichert, wobei die Sicherungsabschnitte von den Leiterendabschnitten beabstandet sind, welche abisoliert werden. D.h. in diesem Fall sind Relativpositionen von wenigstens zwei unterschiedlichen Abschnitten der Leiterelemente gesichert, nämlich zum einen die der Leiterendabschnitte, die abisoliert werden, sowie zum anderen die der Sicherungsabschnitte, die von den genannten Leiterendabschnitten beabstandet sind. Hierdurch kann zum einen das einzelne Leiterelement besser stabilisiert werden, zum anderen kann auch eine mögliche Führung bzw. Neuausrichtung der Leiterelemente besser realisiert werden. Sofern wie oben eine Maske zum Sichern der Leiterendabschnitte verwendet wird, wird die Sicherungsvorrichtung normalerweise auf einer bezüglich des Abisolierwerkzeugs abgewandten Seite der Maske angeordnet, z.B. unterhalb der Maske, falls das Abisolierwerkzeug oberhalb der Maske angeordnet wird. Die Sicherungsabschnitte können insbesondere formschlüssig in der Sicherungsvorrichtung aufgenommen sein. Die Sicherungsvorrichtung kann in unterschiedlicher Weise ausgebildet sein, z.B. als zweite Maske, die wie die oben beschriebene (erste) Maske (zweite) Durchgangsöffnungen aufweisen kann. Die Sicherungsvorrichtung ist normalerweise einstückig ausgebildet und kann bspw. aus Metall oder Keramik bestehen. Sie kann insbesondere als ebene Scheibe ausgebildet sein.

Unter Umständen kann die Sicherungsvorrichtung auch wenigstens teilweise durch den oben beschriebenen Spulenträger der Haarnadelspule gebildet sein. In diesem Fall erfolgt das Abisolieren nachdem die Leiterelemente haarnadelartig geformt und am Spulenträger positioniert wurden.

Gemäß einer bevorzugten Ausführungsform werden erste Leiterendabschnitte der Leiterelemente abisoliert und gegenüberliegende zweite Leiterendabschnitte bilden die Sicherungsabschnitte. In diesem Zusammenhang wird derjenige Leiterendabschnitt als "erster" Leiterendabschnitt bezeichnet, der abisoliert wird, während der andere, diesem gegenüberliegende Leiterendabschnitt des jeweiligen Leiterelements als "zweiter" Leiterendabschnitt bezeichnet wird. Diese Bezeichnungen dienen ausschließlich zur begrifflichen Unterscheidung und sind nicht dahingehend auszulegen, dass der erste und zweite Leiterendabschnitt physisch unterscheidbar sind. Bei dieser Ausführungsform ist das jeweilige Leiterelement somit an gegenüberliegenden Leiterendabschnitten gesichert. Dies kann zum einen die Sicherung bzw. Führung erleichtern, da die beiden Leiterendabschnitte eine vergleichsweise große Entfernung voneinander aufweisen. Zum anderen kann die endseitige Anordnung der zweiten Leiterendabschnitte das Anbringen an der Sicherungsvorrichtung erleichtern. Bevorzugt wird das jeweilige Leiterelement bei dieser Ausführungsform in gestreckter Form bereitgestellt und bleibt während des Abisolierens in gestreckter Form, also bspw. gerade. Nach dem Abisolieren der ersten Leiterendabschnitte können sämtliche Leiterelemente umgedreht werden und die gegenüberliegenden Leiterendabschnitte werden abisoliert, wobei die zuvor abisolierten Leiterendabschnitte als Sicherungsabschnitte fungieren. Nach dem Abisolieren kann das jeweilige Leiterelement bspw. in eine haarnadelartige Form bzw. U-Form gebogen und in einen Spulenträger eingesetzt werden.

Es ist im Rahmen der Erfindung auch möglich, dass die Leiterelemente vor dem Abisolieren haarnadelartig bereitgestellt werden, also bereits zwei Schenkel sowie einen Bogenabschnitt aufweisen. Die Leiterendabschnitte sind dabei an den Schenkeln ausgebildet. In diesem Fall können die ersten und zweiten Leiterendabschnitte gleichzeitig abisoliert werden, wobei die Bogenabschnitte die Sicherungsabschnitte bilden können. Sofern eine Maske verwendet wird, kann diese für jedes Leiterelement zwei Durchgangsöffnungen aufweisen, also eine für den ersten und eine für den zweiten Leiterendabschnitt.

Insbesondere, aber nicht ausschließlich, wenn die zweiten Leiterendabschnitte die Sicherungsabschnitte bilden, kann die Sicherungsvorrichtung eine Mehrzahl von Blindöffnungen aufweisen, wobei die Relativpositionen der Sicherungsabschnitte dadurch gesichert wird, dass jeder Sicherungsabschnitt in eine Blindöffnung eingesetzt wird. Die Blindöffnungen, die auch als Vertiefungen oder (Blind-)Ausnehmungen bezeichnet werden können, dienen zur formschlüssigen Aufnahme des jeweiligen Sicherungsabschnitts, bspw. des zweiten Leiterendabschnitts. Da es sich um Blindöffnungen, also nicht-durchgehende Öffnungen handelt, werden zum einen die Relativpositionen der Sicherungsabschnitte gesichert, zum anderen wird der Sicherungsabschnitt und somit das Leiterelement insgesamt auch abgestützt. Bspw. könnte die Sicherungsvorrichtung scheibenartig ausgebildet sein und waagerecht angeordnet werden, wobei die Blindöffnungen an der Oberseite angeordnet sind, ohne bis zur Unterseite hindurchzugehen. Die Leiterelemente können durch die Sicherungsvorrichtung unterseitig abgestützt werden, bspw. um einer abwärtswirkenden Kraftkomponente seitens des Abisolierwerkzeugs (sowie selbstverständlich der Gewichtskraft der Leiterelemente) entgegenzuwirken. Unter Umständen kann die Sicherungsvorrichtung ähnlich wie die Maske ausgebildet sein, wobei die Anordnung der Blindöffnungen derjenigen der Durchgangsöffnungen entspricht, jedoch mit dem Unterschied, dass erstere nicht-durchgehend ausgebildet sind.

Es ist bevorzugt, dass während des Abisolierens eine Relativbewegung der Maske und der Sicherungsvorrichtung entsprechend einer Kreisbahn erfolgt, wodurch die Verlaufsrichtung der Mehrzahl von Leiterendabschnitten gegenüber der Sicherungsvorrichtung verändert wird. Die Relativbewegung der Maske relativ zur Sicherungsvorrichtung kann durch eine Bewegung der Maske und/oder eine Bewegung der Sicherungsvorrichtung realisiert werden. Betrachtet man die Bewegung der Maske von der Sicherungsvorrichtung aus, so entspricht diese einer Kreisbahn, wobei die Maske in ihrer Gesamtheit einen bezüglich der Sicherungsvorrichtung ortsfesten Punkt umkreist bzw. umläuft. Man kann die Kreisbahn auch als Umlaufbahn der Maske bezeichnen. Während die Maske also relativ zur Sicherungsvorrichtung auf der genannten Kreisbahn bewegt wird, erfolgt normalerweise keine Verdrehung der Maske gegenüber der Sicherungsvorrichtung. Umgekehrt bewegt sich die Sicherungsvorrichtung bezogen auf die Maske ebenfalls auf einer Kreisbahn. Die genannte Relativbewegung kann zum einen durch eine umlaufende, exzenterartige Bewegung der Maske bei feststehender Sicherungsvorrichtung realisiert werden. Zum anderen kann sie durch eine umlaufende Bewegung der Sicherungsvorrichtung bei feststehender Maske realisiert werden. Schließlich kann sie dadurch realisiert werden, dass sowohl die Maske als auch die Sicherungsvorrichtung mit gleicher Winkelgeschwindigkeit um jeweilige Drehachsen gedreht werden, die parallel zueinander verlaufen, allerdings zueinander versetzt sind. Die beschriebene Relativbewegung der Maske gegenüber der Sicherungsvorrichtung beeinflusst die Ausrichtung der Leiterendabschnitte, da diese als Teil der Leiterelemente einerseits mit der Sicherungsvorrichtung verbunden sind und andererseits wie beschrieben formschlüssig in den Durchgangsöffnungen der Maske aufgenommen sind. Insbesondere kann dabei jeder Leiterendabschnitt entlang der Mantelfläche eines gedachten Kegels bewegt werden, ähnlich der Bewegung der Achse eines Kreisels bei einer Präzession.

Vorteilhaft enden Leiterendabschnitte aller Leiterelemente wenigstens benachbart zu einer Bearbeitungsebene, wobei die Kreisbahn parallel zur Bearbeitungsebene verläuft. Die Bearbeitungsebene ist eine gedachte Ebene, die exakt oder wenigstens annähernd der Position des äußersten Endes jedes Leiterendabschnitt entspricht. Bei einer parallelen Ausrichtung der Leiterendabschnitte enden normalerweise alle Leiterendabschnitte exakt in einer solchen Bearbeitungsebene oder zumindest benachbart zu dieser, sofern die Länge sämtlicher Leiterelemente wenigstens annähernd identisch ist. Es versteht sich, dass eine gleichzeitige Bearbeitung der Leiterendabschnitte dadurch vereinfacht wird, wenn ihre Enden alle in einer Ebene angeordnet sind.

Wie bereits oben erläutert wurde, liegt ein besonderer Vorteil des Verfahrens darin, dass mehrere Leiterendabschnitte zeitlich parallel abisoliert werden können. Insbesondere ist es bei dem Verfahren möglich, dass das Abisolierwerkzeug gleichzeitig auf die Leiterendabschnitte aller Leiterelemente einwirkt und diese abisoliert. Auf diese Weise wird eine maximale zeitliche Effizienz erreicht. Es hat sich gezeigt, dass ein gleichzeitiges Abisolieren sämtlicher Leiterendabschnitte mit einem einzigen Abisolierwerkzeug bei zuverlässiger Entfernung der isolierenden Beschichtung möglich ist.

Hinsichtlich der Bewegung des Abisolierwerkzeugs sind unterschiedliche Optionen denkbar. So könnte das Abisolierwerkzeug bspw. eine lineare, oszillierende Bewegung ausführen. Gemäß einer anderen Ausführungsform rotiert das Abisolierwerkzeug während des Abisolierens um eine Rotationsachse. Die Rotationsachse ist dabei normalerweise eine Symmetrieachse des Abisolierwerkzeugs. Sofern das Abisolieren nach dem Einsetzen der Leiterelemente in den Spulenträger erfolgt, kann die Rotationsachse parallel zu einer Symmetrieachse des Spulenträgers verlaufen.

Vorteilhaft kann die Bearbeitungsfläche eben ausgebildet sein. Im Falle eines rotierenden Abisolierwerkzeugs verläuft die Bearbeitungsfläche dabei senkrecht zur Rotationsachse. Die Bearbeitungsfläche kann in diesem Fall die Form einer Kreisscheibe bzw. eines Kreisrings aufweisen. Insbesondere können mittels einer ebenen Bearbeitungsfläche, die parallel zur o.g. Bearbeitungsebene bzw. in dieser angeordnet ist, alle Leiterendabschnitte auf die gleiche Länge gebracht werden, sofern dies zu Anfang nicht (exakt) gegeben ist. D.h. neben einem Abisolieren ist auch eine Längenangleichung möglich. Anders ausgedrückt, wenn anfangs nicht alle Leiterendabschnitte exakt in der Bearbeitungsebene enden, kann mittels einer ebenen Bearbeitungsfläche dafür gesorgt werden. Abgesehen von einer ebenen Ausbildung sind auch bei einem rotierenden Abisolierwerkzeug hinsichtlich der Geometrie der Bearbeitungsfläche unterschiedliche Möglichkeiten gegeben. Bspw. könnte diese kegelstumpfförmig ausgebildet sein.

Weitere vorteilhafte Einzelheiten und Wirkungen der Erfindung sind im Folgenden anhand von unterschiedlichen, in den Figuren dargestellten Ausführungsbeispielen näher erläutert. Es zeigt
- Fig. 1: ein Leiterelement zur Verwendung bei einem erfindungsgemäßen Abisolierverfahren;
- Fig. 2: das Leiterelement aus Fig.1 nach einem Biegevorgang;
- Fig. 3A: eine Detailansicht des Leiterelements aus Fig.1 vor dem Abisolieren;
- Fig. 3B: eine Detailansicht des Leiterelements aus Fig.1 nach dem Abisolieren;
- Fig. 4A: eine Detailansicht eines weiteren Leiterelements vor dem Abisolieren;
- Fig. 4B: eine Detailansicht des Leiterelements aus Fig. 4A nach dem Abisolieren;
- Fig. 5: eine Draufsicht einer ersten Maske zur Verwendung bei dem Abisolierverfahren;
- Fig. 6: eine Schnittdarstellung gemäß der Linie VI-VI in Fig. 5;
- Fig. 7: eine Draufsicht einer Sicherungsvorrichtung zur Verwendung bei dem Abisolierverfahren;
- Fig. 8: eine Schnittdarstellung gemäß der Linie VIII-VIII in Fig. 7;
- Fig. 9A-9C: Leiterelemente sowie weitere Elemente während verschiedener Schritte einer ersten Ausführungsform eines erfindungsgemäßen Abisolierverfahrens;
- Fig. 10: ein Abisolierwerkzeug zur Verwendung bei dem Abisolierverfahren;
- Fig. 11: eine schematische Darstellung der Bewegung eines Leiterendabschnitts während des Abisolierverfahrens;
- Fig. 12: eine Draufsicht einer zweiten Maske zur Verwendung bei dem Abisolierverfahren;
- Fig. 13: eine Draufsicht einer dritten Maske zur Verwendung bei dem Abisolierverfahren;
- Fig. 14: eine Draufsicht einer vierten Maske zur Verwendung bei dem Abisolierverfahren;
- Fig. 15A -15B: Leiterelemente sowie weitere Elemente während verschiedener Schritte einer zweiten Ausführungsform eines erfindungsgemäßen Abisolierverfahrens;
- Fig. 16: einen Spulenträger mit Leiterelementen; sowie
- Fig. 17: einen Spulenträger mit Leiterelementen sowie weitere Elemente während eines Schritts einer dritten Ausführungsform des erfindungsgemäßen Verfahrens.

In den unterschiedlichen Figuren sind gleiche Teile stets mit denselben Bezugszeichen versehen, weswegen diese in der Regel auch nur einmal beschrieben werden.

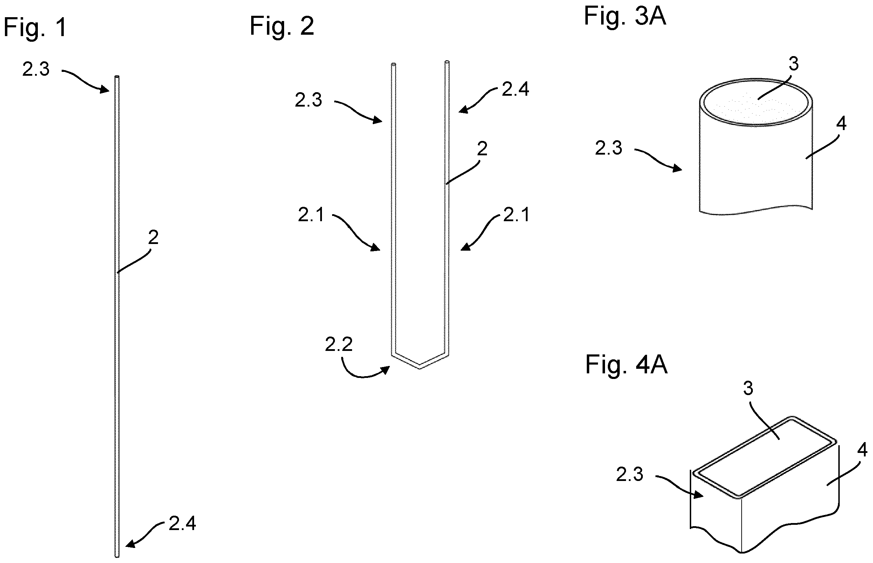

Fig. 1 und 2 zeigen ein Leiterelement 2, das zur Herstellung einer Haarnadelspule 1 verwendet werden kann. Das Leiterelement 2 kann von einem endlosen Draht abgeschnitten werden und weist zunächst eine gestreckte Form auf, wie in Fig. 1 dargestellt. Durch einen oder mehrere Biegevorgänge kann das Leiterelement 2 in die in Fig. 2 dargestellte Form überführt werden, in weicher es auch als Haarnadelelement bezeichnet werden kann. In diesem Zustand ist es haarnadelartig ausgebildet und weist zwei Schenkel 2.1 auf, die durch einen Bogenabschnitt 2.2 verbunden sind. Endseitig der Schenkel 2.1 sind zwei Leiterendabschnitte 2.3, 2.4 ausgebildet. Das Leiterelement 2 ist einstückig gefertigt und weist einen Kern 3 aus Kupfer bzw. einer Kupferlegierung auf sowie eine elektrisch isolierende Oberflächenbeschichtung 4, wie in der Detailansicht in Fig. 3A sowie 4A erkennbar ist. Sein Querschnitt kann z.B. rund ausgebildet sein wie in Fig.3A oder rechteckig wie in Fig. 4A.

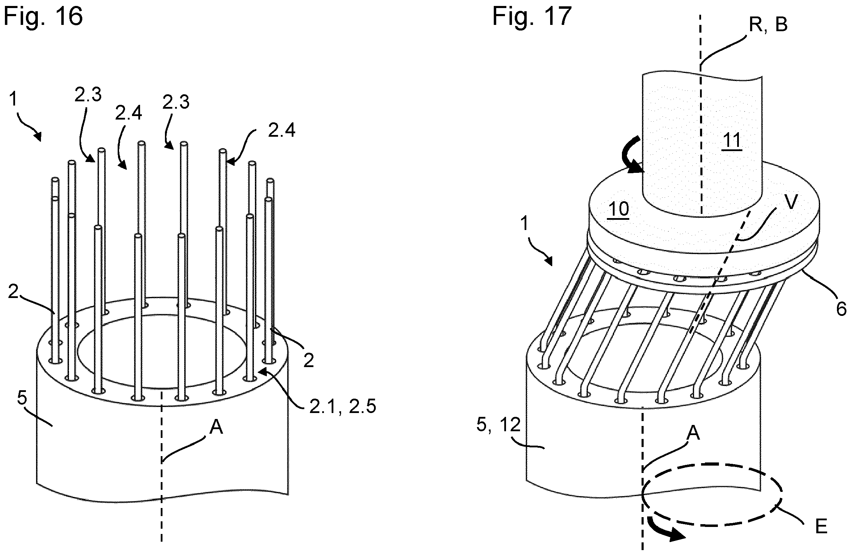

Fig. 16 zeigt eine Mehrzahl von haarnadelförmigen Leiterelementen 2 als Teile einer Haarnadelspule 1, die bspw. Teil eines Stators für einen Antriebsmotor eines Elektrofahrzeugs sein kann. Sämtliche Darstellungen der Leiterelemente 2, der Haarnadelspule 1 sowie der weiteren gezeigten Elemente sind schematisch zu verstehen und können in Details von den tatsächlichen Gegebenheiten abweichen. Insbesondere sind die Proportionen der Leiterelemente 2 im Allgemeinen nicht exakt wiedergegeben. Die Haarnadelelemente 2 sind in einen Spulenträger 5 eingesetzt worden und die vom Spulenträger 5 abragenden Leiterendabschnitte 2.3, 2.4 verlaufen parallel zu einer Symmetrieachse A des Spulenträgers 5. Um die elektrischen Verbindungen zwischen den Leiterelementen 2 herzustellen, müssen die Leiterendabschnitte 2.3, 2.4 entsprechend einer vorgesehen Verschaltung gebogen und benachbart zueinander angeordnet werden, so dass sie in einem weiteren Bearbeitungsschritt verschweißt werden können. Um dieses Verschweißen durchzuführen zu können, muss zuvor die Oberflächenbeschichtung 4 wenigstens teilweise entfernt werden.

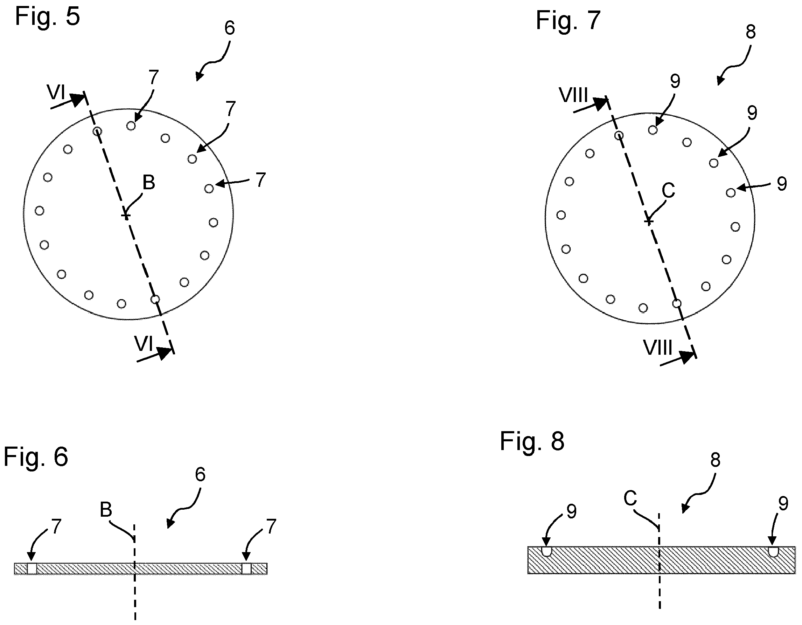

Fig. 5 und 6 zeigen eine aus Metall (bspw. Edelstahl) oder Keramik bestehende Maske 6, die bei einer ersten Ausführungsform des erfindungsgemäßen Abisolierverfahrens eingesetzt wird. Sie ist als ebene Kreisscheibe ausgebildet und weist eine Mehrzahl von Durchgangsöffnungen 7 auf, die äquidistant um eine Symmetrieachse B der Maske 6 herum angeordnet sind. Die Durchgangsöffnungen 7 sind so dimensioniert, dass jeweils ein erster Leiterendabschnitt 2.3 auch dann aufgenommen werden kann, wenn eine Verlaufsrichtung V desselben um eine vorgesehene Neigung von der Symmetrieachse B abweicht. Eine in Fig. 7 und 8 dargestellte Sicherungsplatte 8 ist in diesem Ausführungsbeispiel ähnlich der Maske 6 als ebene Kreisscheibe aus Metall oder Keramik ausgebildet. Sie weist eine Mehrzahl von Blindöffnungen (bzw. Vertiefungen) 9 sowie eine Symmetrieachse C auf. Die Anordnung der Blindöffnungen 9 entspricht derjenigen der Durchgangsöffnungen 7. Sie sind so dimensioniert, dass sie jeweils einen zweiten Leiterendabschnitt 2.4 formschlüssig aufnehmen können, auch wenn dessen Verlaufsrichtung V gegenüber der Symmetrieachse C geneigt ist.

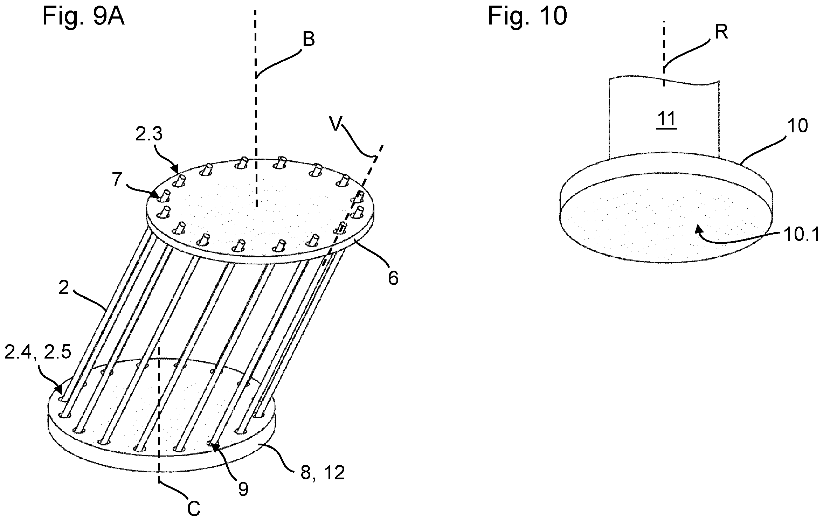

Fig. 9A bis 9C illustrieren verschiedene Schritte des erfindungsgemäßen Verfahrens gemäß einer ersten Ausführungsform. Wie in Fig. 9A dargestellt ist, wird eine Mehrzahl von gestreckt ausgebildeten Leiterelementen 2 so positioniert, dass ihre zweiten Leiterendabschnitte 2.4 in den Blindöffnungen 9 aufgenommen sind, während die ersten Leiterendabschnitte 2.4 durch die Durchgangsöffnungen 2.3 hindurchragen. Durch die formschlüssige Aufnahme in den Durchgangsöffnungen 7 sind die Relativpositionen der Leiterendabschnitte 2.3 zueinander gesichert. Die Maske 6 und die Sicherungsplatte 8 sind parallel zueinander ausgerichtet, d.h. ihre jeweiligen Symmetrieachsen B, C verlaufen parallel. Sie sind allerdings seitlich gegeneinander versetzt, so dass die Verlaufsrichtung V der Leiterelemente 2 in einem Winkel von ca. 30° zu den Symmetrieachsen B, C geneigt ist, was allerding rein beispielhaft zu verstehen ist.

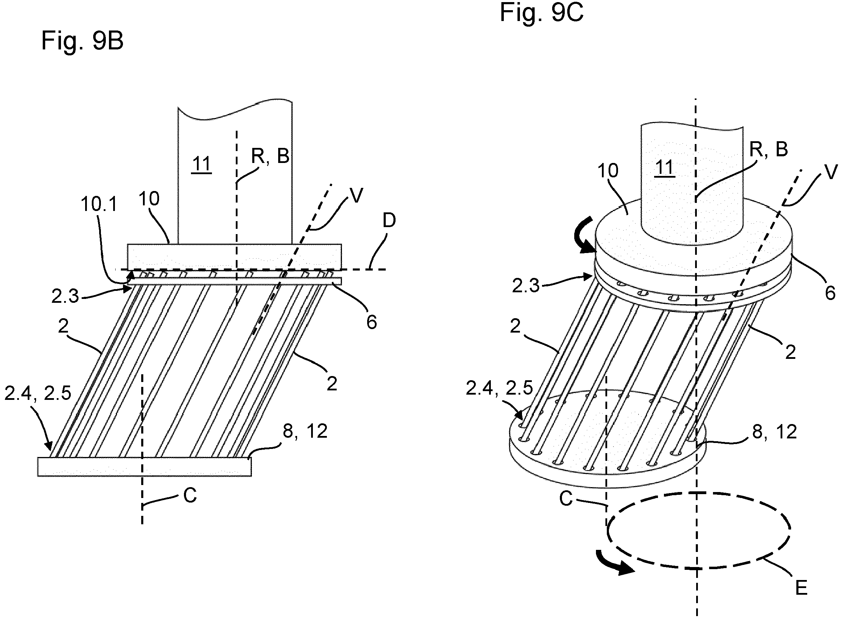

Nachdem die Relativpositionen der ersten Leiterendabschnitte 2.3 wie beschrieben gesichert wurden, wird eine als Abisolierwerkzeug dienende Schleifscheibe 10 an die Leiterendabschnitte 2.3 herangeführt, wie in Fig. 9B und 9C dargestellt. Die Schleifscheibe 7, die in Fig. 10 einzeln dargestellt ist, ist an einem motorisch angetriebenen Schaft 11 befestigt und weist eine ebene, kreisförmige Bearbeitungsfläche 10.1 auf, die senkrecht zu einer Rotationsachse R der Schleifscheibe 7 verläuft. Die Bearbeitungsfläche 7.1 ist abrasiv bzw. abtragend ausgebildet und weist eine Härte auf, die deutlich größer ist als die des Kerns 3 sowie die der Oberflächenbeschichtung 4. Die Rotationsachse R wird parallel zu der Symmetrieachse B der Maske 6, genauer gesagt deckungsgleich mit dieser, ausgerichtet. Dementsprechend verläuft die Bearbeitungsfläche 7.1 in einer zur Symmetrieachse B senkrechten Bearbeitungsebene D. Sämtliche Leiterendabschnitte 2.3 enden in der Bearbeitungsebene D oder unmittelbar benachbart zu dieser, wie in der Seitendarstellung von Fig. 9B erkennbar ist.

Während die Bearbeitungsfläche 7.1 mit den ersten Leiterendabschnitten 2.3 in Kontakt steht, rotiert sie um die Rotationsachse R, wie in Fig. 9C dargestellt, so dass durch die Einwirkung der Bearbeitungsfläche 7.1 ein Teil des jeweiligen Leiterendabschnitts 2.3 abgetragen wird. Sofern einer der Leiterendabschnitte 2.3 über die Bearbeitungsebene D hinausragt, wird er hierbei auf ein vorgesehenes Maß gekürzt. In jedem Fall werden die Leiterendabschnitte 2.3 schräg angeschliffen, da die Bearbeitungsfläche 7.1 in einem Winkel von ca. 60° zur Verlaufsrichtung V der Leiterendabschnitte 2.3 ausgerichtet ist. Durch das Anschleifen erfolgt ein Abisolieren, bei dem die Oberflächenbeschichtung 4 bereichsweise entfernt wird. Während die erste Maske 6 im weiteren Verlauf stationär gehalten wird, wird die als Sicherungsvorrichtung 12 dienende Sicherungsplatte 8 auf einer Kreisbahn E bewegt, wie in Fig. 9C angedeutet.

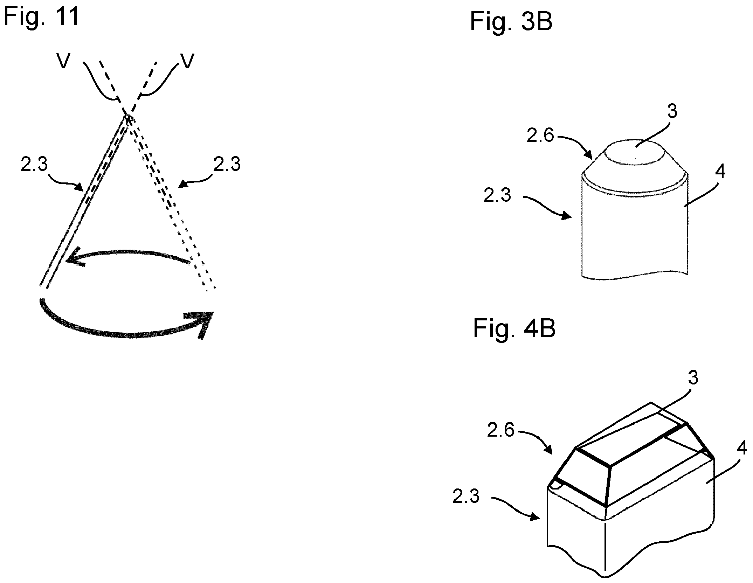

Durch die Bewegung der Sicherungsplatte 8 wird die Ausrichtung jedes ersten Leiterendabschnitts 2.3 sukzessive verändert. Die in den Blindöffnungen 9 aufgenommenen zweiten Leiterendabschnitte 2.4 dienen dabei als Sicherungsabschnitte 2.5, über welche die Leiterelemente 2 abgestützt und geführt werden. Jeder der ersten Leiterendabschnitte 2.3 bewegt sich in etwa entlang der Oberfläche eines Kegels, wie in Fig. 11 angedeutet. Man kann die Bewegung des Leiterendabschnitts 2.3 auch mit der Bewegung einer Kreiselachse bei einer Präzession vergleichen. Während des gesamten Vorgangs bleiben die ersten Leiterendabschnitte 2.3 - sowie die Leiterelemente 2 insgesamt - parallel zueinander ausgerichtet und der Winkel zwischen der Verlaufsrichtung V und der Bearbeitungsfläche 10.1 ändert sich nicht. Aufgrund der sich ändernden Ausrichtung der ersten Leiterendabschnitte 2.3 werden allerdings nach und nach unterschiedliche Teile des jeweiligen Leiterendabschnitts 2.3 von der Bearbeitungsfläche 10.1 erfasst, wobei jeweils ein abschnittsweises Abtragen der Oberflächenbeschichtung 4 sowie eines Teils des Kerns 3 erfolgt. Nachdem die Sicherungsplatte 8 die Kreisbahn E einmal vollständig durchlaufen hat, ist durch die Einwirkung der Bearbeitungsfläche 10.1 an jedem Leiterendabschnitt 2.3 eine umlaufende Fase 2.6 entstanden. Deren Form entspricht, wie in Fig. 3B dargestellt, einem Kegelstumpf mit einem Öffnungswinkel von ca. 120° (entsprechend dem Doppelten des Winkels zwischen der Verlaufsrichtung V und der Bearbeitungsfläche 10.1). Sofern die Leiterelemente 2 entsprechend Fig. 4A einen rechteckigen Querschnitt aufweisen, kann die Sicherungsplatte 8 ebenfalls die Kreisbahn E durchlaufen, wobei die Schleifscheibe 10 allerdings nur bei bestimmten Ausrichtungen auf die Leiterendabschnitte 2.3 einwirkt, während sie dazwischen abgehoben wird. So kann sich die in Fig. 4B dargestellte Form eines Pyramidenstumpfs ergeben, wobei die Fase 2.6 aber wiederum umlaufend um den ersten Leiterendabschnitt 2.3 ausgebildet ist.

Nach dem Abisolieren der ersten Leiterendabschnitte 2.3 wird die Schleifscheibe 10 wieder entfernt und die Leiterelemente 2 werden aus der Maske 6 und der Sicherungsplatte herausgenommen. Anschließend können die Leiterelemente 2 umgedreht werden, so dass ein entsprechendes Abisolieren der zweiten Leiterendabschnitte 2.4 erfolgen kann. Danach können die Leiterelemente 2, wie in Fig. 2 dargestellt, in eine haarnadelartige Form gebracht und, wie in Fig. 16 dargestellt, in den Spulenträger 5 eingesetzt werden. Im Weiteren werden die Leiterendabschnitte 2.3, 2.4 entsprechend einer vorgesehen Verschaltung gebogen und benachbart zueinander angeordnet, so dass sie in einem weiteren Bearbeitungsschritt verschweißt werden können.

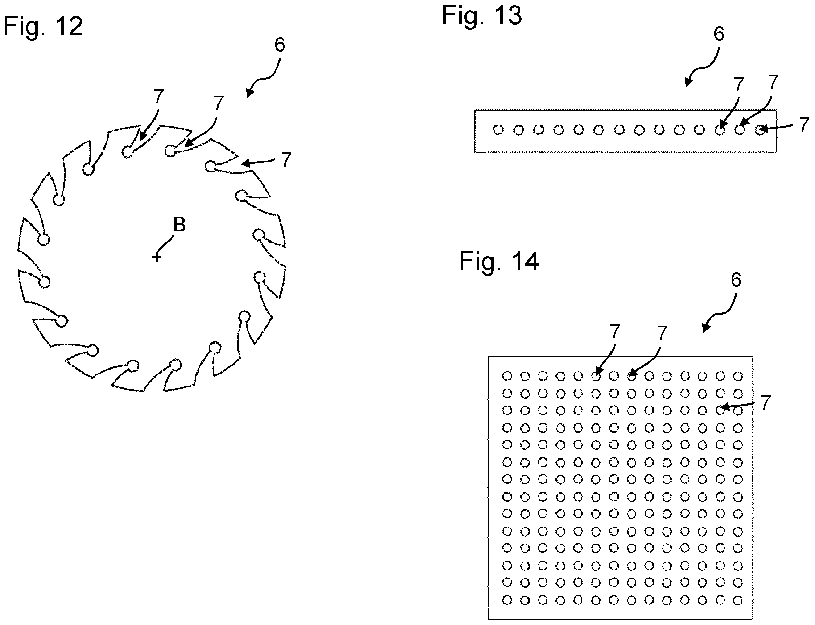

Bei der in Fig. 5 dargestellten Maske 6 liegen die Durchgangsöffnungen 7 innerhalb, d.h. sie sind ringsherum von der Maske 6 begrenzt. Daher müssen die Leiterendabschnitte 2.3 quer zur Erstreckungsebene der Maske 6 durch die Durchgangsöffnungen 7 geführt werden. Alternativ kann bspw. die in Fig. 12 dargestellte Maske 6 verwendet werden, bei welcher die Durchgangsöffnungen 7 randseitig offen sind, so dass die Leiterendabschnitte 2.3 parallel zur Erstreckungsebene der Maske 6 eingeführt werden können. Der Querschnitt der Durchgangsöffnungen 7 verjüngt sich nach innen zu einer vorgesehenen Position des jeweiligen Leiterendabschnitts 2.3, was das Einführen desselben erleichtert. Sämtliche Durchgangsöffnungen 7 erstrecken sich schräg (also gewissermaßen radialtangential) nach innen, so dass die Leiterendabschnitte 2.3 bspw. durch eine Drehbewegung der Maske 6 um die Symmetrieachse B eingeführt werden können. Die hier gezeigte Maske 6 kann in Kombination mit der in Fig. 7 dargestellten Sicherungsplatte 8 verwendet werden.

Während die in Fig. 6 und Fig. 12 gezeigten Masken 6 einen kreisähnlichen Querschnitt aufweisen, wobei auch die Durchgangsöffnungen 7 kreisartig angeordnet sind, können aber auch verschiedene andere geometrische Ausgestaltung vorteilhaft eingesetzt werden, so bspw. die in Fig. 13 dargestellte Maske 6, die einen langgestreckten, rechteckigen Querschnitt aufweist, wobei die Durchgangsöffnungen 7 entlang einer Geraden angeordnet sind. In diesem Fall kann eine Sicherungsplatte 8 mit einem vergleichbaren Querschnitt und einer entsprechenden Anordnung der Blindöffnungen 9 verwendet werden. Als Abisolierwerkzeug kann neben einer rotierenden Schleifscheibe 10 auch bspw. eine linear oszillierende Schleifscheibe bzw. -platte eingesetzt werden. Fig. 14 zeigt eine weitere Ausgestaltung einer Maske 6, die einen quadratischen Querschnitt aufweist mit einer großen Anzahl entlang von Durchgangsöffnungen 7, die nach Art eines Rechteckgitters angeordnet sind. Es versteht sich, dass auch hierbei eine hinsichtlich der Geometrie angepasste Sicherungsplatte 8 verwendet wird.

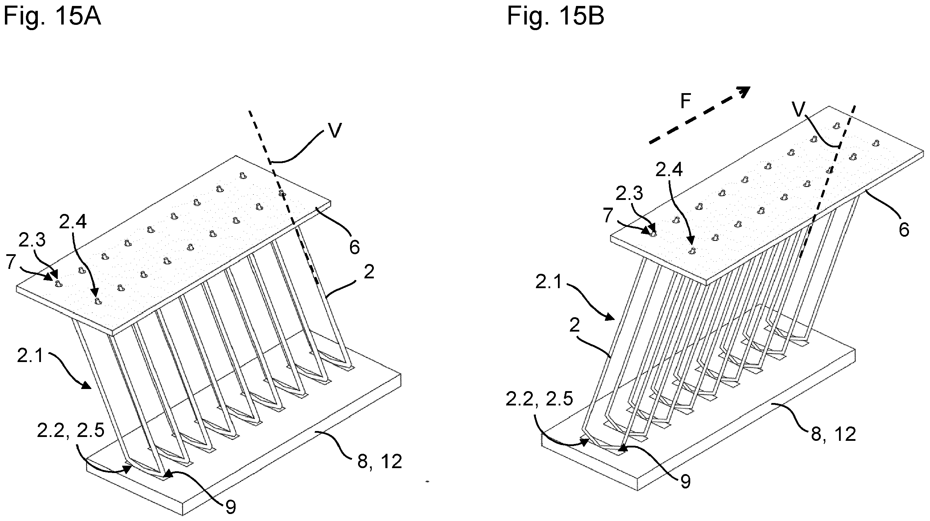

Fig. 15A und 15B zeigen Schritte einer zweiten Ausführungsform des erfindungsgemäßen Abisolierverfahrens. In diesem Fall werden die Leiterelemente 2 nicht in dem in Fig. 1 dargestellten gestreckten Zustand abisoliert, sondern bereits in ihrer haarnadelartigen Form gemäß Fig. 2. Dabei werden die Bogenabschnitte 2.2 in langgestreckten Blindöffnungen 9 einer rechteckigen Sicherungsplatte 8 aufgenommen. In diesem Fall fungieren die Bogenabschnitte 2.2 somit als Sicherungsabschnitte 2.5. Sowohl die ersten Leiterendabschnitte 2.3 als auch die zweiten Leiterendabschnitte 2.4 werden durch Durchgangsöffnungen 7 einer ebenfalls rechteckigen Maske 6 geführt. Die Maske 6 und die Sicherungsplatte 8 werden so angeordnet, dass eine Verlaufsrichtung V der jeweiligen Leiterendabschnitte 2.3, 2.4 schräg zur Erstreckungsebene der Maske 6 verläuft. Auch in diesem Fall sind sämtliche Leiterendabschnitte 2.3,2.4 parallel zueinander angeordnet. Mit einem hier nicht dargestellten Abisolierwerkzeug wird zunächst in der in Fig. 15A dargestellten Position auf einer Seite der Leiterendabschnitte 2.3, 2.4 Material entfernt, wodurch sich eine Fase bildet. Dann wird das Abisolierwerkzeug entfernt und die Maske 6 wird linear entlang einer Verstellrichtung F verstellt, wodurch sie in die in Fig. 15B dargestellte Position gelangt. Danach wird das Abisolierwerkzeug wieder an die Leiterendabschnitte 2.3,2.4 herangeführt und bearbeitet diese abtragend, wodurch an einer gegenüberliegenden Seite ebenfalls eine Fase erzeugt wird. Bei der hier dargestellten Ausführungsform wird die Oberflächenbeschichtung 4 nicht auf allen Seiten des Leiterendabschnitt 2.3, 2.4 entfernt, allerdings doch zu einem großen Teil, insbesondere dann, wenn die Leiterelemente 2 den in Fig. 4A dargestellten rechteckigen Querschnitt aufweisen. Je nach Art des eingesetzten Schweißverfahrens kann dies ausreichend sein. Es ist zu beachten, dass die Leiterendabschnitte 2.3, 2.4 alle in einer (in Fig. 15A und 15B nicht eigens eingezeichneten) Bearbeitungsebene D enden, wodurch sie insgesamt in effizienter Weise gleichzeitig bearbeitet und abisoliert werden können.

Fig. 17 zeigt schematisch einen Schritt einer dritten Ausführungsform des erfindungsgemäßen Verfahrens. In diesem Fall erfolgt das Abisolieren der Leiterendabschnitte 2.3, 2.4, nachdem die haarnadelartig geformten Leiterelemente 2 bereits in den Spulenträger 5 eingesetzt wurden, der hierbei eine Sicherungsvorrichtung 12 (bzw. ein Teil derselben) bildet. Teile der Schenkel 2.1 bilden dabei Sicherungsabschnitte 2.5. Um eine Verschiebung der Leiterelemente 2 innerhalb des Spulenträgers 5 zu verhindern, können sie in hier nicht dargestellter Weise im Bereich der Bogenabschnitte 2.2 abgestützt werden. Die Leiterendabschnitte 2.3, 2.4 werden durch Durchgangsöffnungen 7 einer entsprechend Fig. 5 ausgebildeten Maske hindurchgeführt. Danach wird der Spulenträger 5 gegenüber der Maske 6 exzentrisch entlang einer Kreisbahn E geführt, wodurch die Verlaufsrichtung der Leiterendabschnitte 2.3, 2.4 jeweils im Winkel zur Symmetrieachse A des Spulenträgers 5 verläuft, während sich ihre Ausrichtung kontinuierlich ändert. D. h. auch hier bewegt sich der jeweilige Leiterendabschnitt 2.3, 2.4 auf einem gedachten Kegel, wie in Fig. 11 dargestellt. Ähnlich wie in Fig. 9C dargestellt werden die Leiterendabschnitte 2.3, 2.4 währenddessen durch die rotierende Schleifscheibe 10 bearbeitet. Bei dieser Ausführungsform sind große Teile des haarnadelförmigen Leiterelements 2 formschlüssig innerhalb des Spulenträgers 5 aufgenommen, so dass es nicht frei beweglich ist. Aus diesem Grund müssen die Leiterendabschnitte 2.3, 2.4 kontinuierlich umgebogen werden, um die beschriebene Änderung der Verlaufsrichtung V zu realisieren. Die entsprechende Umformung kann je nach Material und Querschnitt des Leiterelements 2 problematisch sein, z.B. da eine Materialermüdung eintreten könnte. Andererseits besteht ein großer Vorteil darin, dass bei dieser Ausführungsform das Abisolieren unmittelbar am Spulenträger 5 durchgeführt werden kann, wodurch sich das gesamte Herstellungsverfahren der Haarnadelspule 1 vereinfacht und zudem die Notwendigkeit für eine Sicherungsplatte 8 entfällt.

### Bezugszeichenliste

- 1: Haarnadelspule
- 2: Leiterelement
- 2.1: Schenkel
- 2.2: Bogenabschnitt
- 2.3, 2.4: Leiterendabschnitt
- 2.5: Sicherungsabschnitt
- 2.6: Fase
- 3: Kern
- 4: Oberflächenbeschichtung
- 5: Spulenträger
- 6: Maske
- 7: Durchgangsöffnung
- 8: Sicherungsplatte
- 9: Blindöffnung
- 10: Schleifscheibe
- 10.1: Bearbeitungsfläche
- 11: Schaft
- 12: Sicherungsvorrichtung
- A, B: Symmetrieachse
- D: Bearbeitungsebene
- E: Kreisbahn
- F: Verstellrichtung
- R: Rotationsachse
- V: Verlaufsrichtung

## Patentansprüche

1. Abisolierverfahren für Leiterelemente (2) für eine Haarnadelspule (1), zumindest mit den Schritten:
- Bereitstellen einer Mehrzahl von Leiterelementen (2), jeweils aufweisend eine elektrisch isolierende Oberflächenbeschichtung (4) sowie Leiterendabschnitte (2.3, 2.4),
- Sichern der Relativpositionen von Leiterendabschnitten (2.3, 2.4) der Mehrzahl von Leiterelementen (2) zueinander, sowie
- Gleichzeitiges Abisolieren einer Mehrzahl von Leiterendabschnitten (2.3, 2.4) mehrerer Leiterelemente (2) durch wenigstens bereichsweises Entfernen der Oberflächenbeschichtung (4), indem eine Bearbeitungsfläche (10.1) eines Abisolierwerkzeugs (10) gleichzeitig abtragend an der Mehrzahl von Leiterendabschnitten (2.3, 2.4) entlang bewegt wird.

2. Abisolierverfahren nach Anspruch 1,
**dadurch gekennzeichnet, dass**
die Relativpositionen der Leiterendabschnitte (2.3, 2.4) gesichert werden, indem eine Maske (6) mit einer Mehrzahl von Durchgangsöffnungen (7) so positioniert wird, dass jeweils ein Leiterendabschnitt (2.3, 2.4) in einer Durchgangsöffnung (7) formschlüssig aufgenommen ist und durch diese hindurchragt.

3. Abisolierverfahren nach einem der vorherigen Ansprüche,
**dadurch gekennzeichnet, dass**
die Mehrzahl von Leiterendabschnitten (2.3, 2.4) vor dem Sichern der Relativpositionen parallel ausgerichtet werden und beim Abisolieren die Bearbeitungsfläche (10.1) schräg zur Verlaufsrichtung (V) der Mehrzahl von Leiterendabschnitten (2.3, 2.4) ausgerichtet ist.

4. Abisolierverfahren nach einem der vorherigen Ansprüche,
**dadurch gekennzeichnet, dass**
während des Abisolierens die Mehrzahl von Leiterendabschnitten (2.3, 2.4) parallel gehalten werden und ihre Verlaufsrichtung (V) gegenüber der Bearbeitungsfläche (10.1) so verändert wird, dass nacheinander verschiedene Teile der Leiterendabschnitte (2.3, 2.4) abisoliert werden.

5. Abisolierverfahren nach einem der vorherigen Ansprüche,
**dadurch gekennzeichnet, dass**
durch eine Sicherungsvorrichtung (12) die Relativpositionen von Sicherungsabschnitten (2.5) der Mehrzahl von Leiterelementen (2) zueinander gesichert werden, wobei die Sicherungsabschnitte (2.5) von den Leiterendabschnitten (2.3) beabstandet sind, welche abisoliert werden.

6. Abisolierverfahren nach einem der vorherigen Ansprüche,
**dadurch gekennzeichnet, dass**
erste Leiterendabschnitte (2.3) der Leiterelemente (2) abisoliert werden und gegenüberliegende zweite Leiterendabschnitte (2.4) die Sicherungsabschnitte (2.5) bilden.

7. Abisolierverfahren nach einem der vorherigen Ansprüche,
**dadurch gekennzeichnet, dass**
während des Abisolierens eine Relativbewegung der Maske (6) und der Sicherungsvorrichtung (12) entsprechend einer Kreisbahn (E) erfolgt, wodurch die Verlaufsrichtung (V) der Mehrzahl von Leiterendabschnitten (2.3, 2.4) gegenüber der Sicherungsvorrichtung (12) verändert wird.

8. Abisolierverfahren nach einem der vorherigen Ansprüche,
**dadurch gekennzeichnet, dass**
Leiterendabschnitte (2.3, 2.4) aller Leiterelemente (2) wenigstens benachbart zu einer Bearbeitungsebene (D) enden, wobei die Kreisbahn (E) parallel zur Bearbeitungsebene (D) verläuft.

9. Abisolierverfahren nach einem der vorherigen Ansprüche,
**dadurch gekennzeichnet, dass**
das Abisolierwerkzeug (10) während des Abisolierens um eine Rotationsachse (R) rotiert.

10. Abisolierverfahren nach einem der vorherigen Ansprüche,
**dadurch gekennzeichnet, dass**
die Bearbeitungsfläche (10.1) eben ausgebildet ist.
